## Europäisches Patentamt

## European Patent Office

## Office européen des brevets

(19)

(11) Veröffentlichungsnummer: **0 166 879**
**B1**

(12) **EUROPÄISCHE PATENTSCHRIFT**

(45) Veröffentlichungstag der Patentschrift:
**29.06.88**

(51) Int. Cl.⁴: **F 16 D 65/12**

(21) Anmeldenummer: **85104485.9**

(22) Anmeldetag: **12.04.85**

(54) **Bremsscheibe mit geteiltem Reibring.**

(30) Priorität: **19.04.84 DE 3415023**

(43) Veröffentlichungstag der Anmeldung:
**08.01.86 Patentblatt 86/2**

(45) Bekanntmachung des Hinweises auf die Patenterteilung:
**29.06.88 Patentblatt 88/26**

(84) Benannte Vertragsstaaten:
**DE FR GB IT**

(56) Entgegenhaltungen:
**DE-A-1 605 238**
**DE-A-2 920 716**
**DE-B-2 246 517**
**DE-B-2 545 544**
**FR-A-2 118 815**
**FR-A-2 452 638**
**US-A-3 933 228**

(73) Patentinhaber: **KNORR- BREMSE AG, Moosacher Strasse 80 Postfach 401060, D-8000 München 40 (DE)**

(72) Erfinder: **Wirth, Xaver, Dr., Birkhuhnweg 18, D-8045 Ismaning (DE)**

## Beschreibung

Die Erfindung betrifft eine Bremsscheibe mit aus zwei Ringteilen aufgebautem Reibring, insbesondere Achsbremsscheibe für Schienenfahrzeuge, mit zwei axial versetzten, entsprechend dem Reibring geteilten Ringkörpern, wobei jeweils zwei einander axial gegenüberstehende Ringkörper durch im wesentlichen radial verlaufende Rippen miteinander verbunden sind, und mit einer die Trennfuge zwischen den Reibringteilen mit Vorspannung überbrückenden Verschraubung, wobei einander gegenüberstehende Stirnflächen der Reibringteile in den Bereichen der Verschraubung und ihrer seitlichen Begrenzung aneinander anliegen, in den übrigen Bereichen dagegen Abstand zueinander aufweisen.

Bekannt sind Bremsscheiben mit geteiltem Reibring, insbesondere geteilte Wellenbremsscheiben, welche in zumindest zwei Reibringhälften unterteilt sind. Die Reibringe sind so ausgeführt, daß die beiden Reibringhälften über ihre ganzen Stirnseiten eben aneinander anliegen und über Pass- oder Dehnschrauben an diesen stirnseitigen Flanschflächen zusammengespannt sind (DE-A-1 952 313). Bei Wellenbremsscheiben besteht der Reibring im allgemeinen aus einem Spezialgraugruß und die ihn tragende Nabe aus Stahlguß. Die Verbindung der Nabe und des Reibringes kann in vielfältiger Weise gelöst, beispielsweise durch Schwerspannhülsen gebildet sein. Bei diesen bekannten Bremsscheiben liegen die Reibringteile also über rechteckige Berührungsflächen aneinander an und sind mehr oder weniger zentral in den Rechteckberührungsflächen gegeneinander vermittels der Verschraubung verspannt. Hierbei besteht die Gefahr, daß sich die Berührungsflächen beider Ringkörper in ihren Randbereichen voneinander abheben, wodurch Spalte entstehen, in welche Bremsstaub eindringen kann. Beim durch Bremsvorgänge bewirkten Erwärmen und nachfolgendem Wiederabkühlen der Bremsscheibe sucht sich die Weite dieser Spalte zu ändern, wird daran jedoch infolge des eingedrungenen Bremsstaubes behindert; hierdurch können zu Brüchen führende Spannungen hervorgerufen werden. Außerdem bewirken die Spalte in der Bremsfläche der Bremsscheibe eine gesteigerte Abnutzung der an diese Bremsfläche andrückbaren Bremsbeläge.

Die DE-B-2 545 544 zeigt eine den eingangs genannten Merkmalen entsprechende Bremsscheibe, deren Reibringteile stirnseitig radial weit außen miteinander verschraubt sind und in einem axial mittleren, radial mit Abstand von der radial inneren Begrenzung der Reibringteile endenden Bereich eine Ausnehmung aufweisen. Über die weitere Gestaltung dieser Ausnehmung ist dieser Schrift nichts entnehmbar.

Mit der DE-A-2 920 716 ist vorgeschlagen worden, entlang der Trennfugen der Ringkörper von deren Rand ausgehende und eine bestimmte Tiefe aufweisende Spalte vorzusehen, so daß die Berührfläche der Ringkörper sich auf einen kleineren Bereich innerhalb der Trennfugenfläche beschränkt. Auch hier führen jedoch die Spalte in den Reibflächen der Bremsscheibe zu einem erhöhten Belagverschleiß, zudem kann sich eine zur Unrundheit des Reibringes führende Verformung ergeben.

Es ist Aufgabe der Erfindung, eine Bremsscheibe der eingangs genannten Art derart auszugestalten, daß die Ringkörper vermittels der Verschraubung eine sichere, keine Spalte in den Reibflächen der Bremsscheibe bewirkende Verbindung erfahren, wobei zudem ungewollte Verformungen der Ringkörper und der Aufbau überhöhter Spannungen ausgeschlossen wird.

Diese Aufgabe wird nach der Erfindung für eine Bremsscheibe der eingangs angegebenen Art durch eine Ausbildung gemäß den im kennzeichnenden Teil des Patentanspruches 1 angegebenen Merkmalen gelöst.

Der Unteranspruch zeigt eine nach der weiteren Erfindung vorteilhafte Ausbildungsmöglichkeit für eine Bremsscheibe gemäß dem Hauptanspruch auf.

Die Erfindung ist nachfolgend anhand von Ausführungsbeispielen unter Bezugnahme auf die beigefügte Zeichnung erläutert; dabei zeigt:

Figur 1    eine schematische Ansicht einer geteilten Wellenbremsscheibe ohne Darstellung der sie mit der abzubremsenden Welle verbindenden Nabe;

Figur 2    eine schematische Draufsicht von Linie II-II auf die Wellenbremsscheibe;

Figur 3    eine geänderte Wellenbremsscheibe in Darstellung nach Fig. 2 in vergrößertem Maßstab;

Figur 4    eine Stirnansicht auf die Stirnfläche eines Reibringteiles in nochmals vergrößertem Maßstab;

Figur 5    einen Schnitt durch den Endabschnitt eines Reibringteiles im nochmals vergrößerten Maßstab, und

Figur 6    ein die Funktionsweise der Erfindung erläuterndes Schemabild.

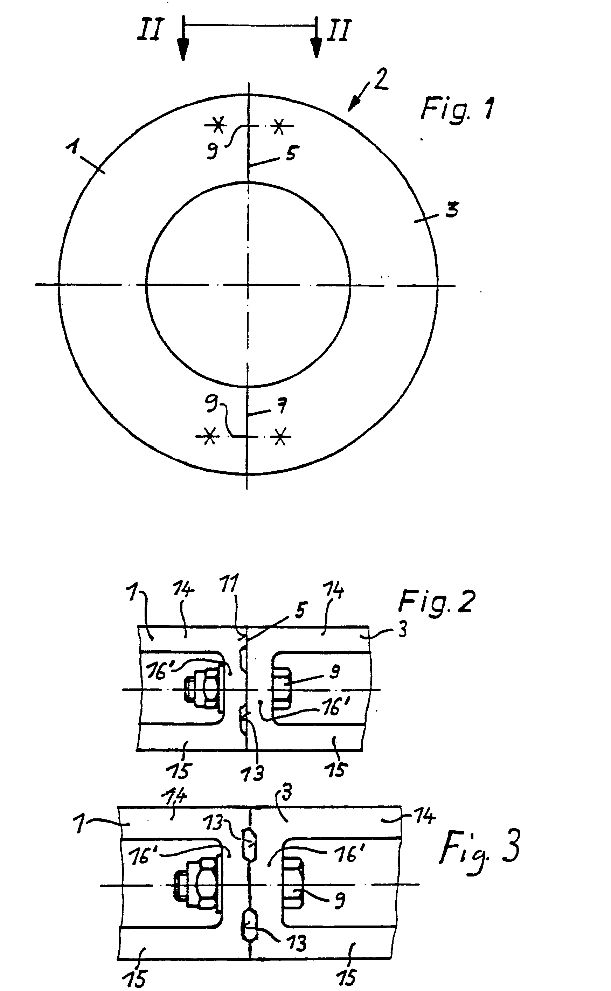

Die in Figur 1 dargestellte, geteilte Wellenbremsscheibe weist einen in zwei Reibringteile 1 und 3 geteilten Reibring 2 auf, wobei die beiden Trennfugen mit den Bezugszeichen 5 und 7 bezeichnet sind. Die beiden Reibringteile 1 und 3 sind mittels je einer durch die Linien x-x in Figur 1 angedeuteter, die Trennfuge 5 bzw. 7 überbrückender Verschraubung 9 miteinander verbunden. Die Verschraubungen 9 können durch Paß- oder Dehnschrauben realisiert sein, wie in Figur 2 und 3 angedeutet ist. Der Nabenteil der Bremsscheibe ist in Figur 1 weggelassen. Bei der Ausführung nach Figur 2 weist in der Trennfuge 5 der Reibringteil 3 eine ebene Stirnfläche (11) auf, während die Stirnfläche 13 des Reibringteiles 1, wie später erläutert, profiliert ausgebildet ist. Auch an der Trennfuge 9 ist eine Stirnfläche, vorzugsweise diejenige des Reibringteiles 1, eben und die andere Stirnfläche, vorzugsweise diejenige des Reibringteiles 3, profiliert ausgebildet; bei dieser Anordnung weist jeder Reibringteil eine ebene und eine profilierte Stirnfläche auf.

Bei der Ausführungsform nach Figur 3 sind jeweils beide Stirnflächen beider Reibringteile 1 und 3 in der nachstehend erläuterten Weise profiliert ausgebildet. Sie entsprechen damit der Stirnflächen 13 nach Figur 2.

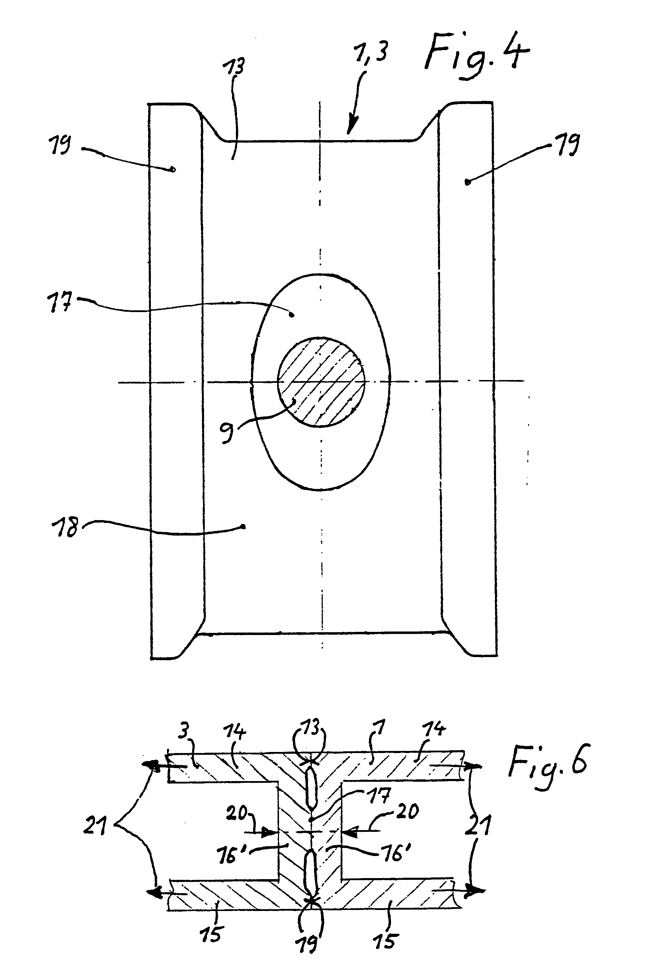

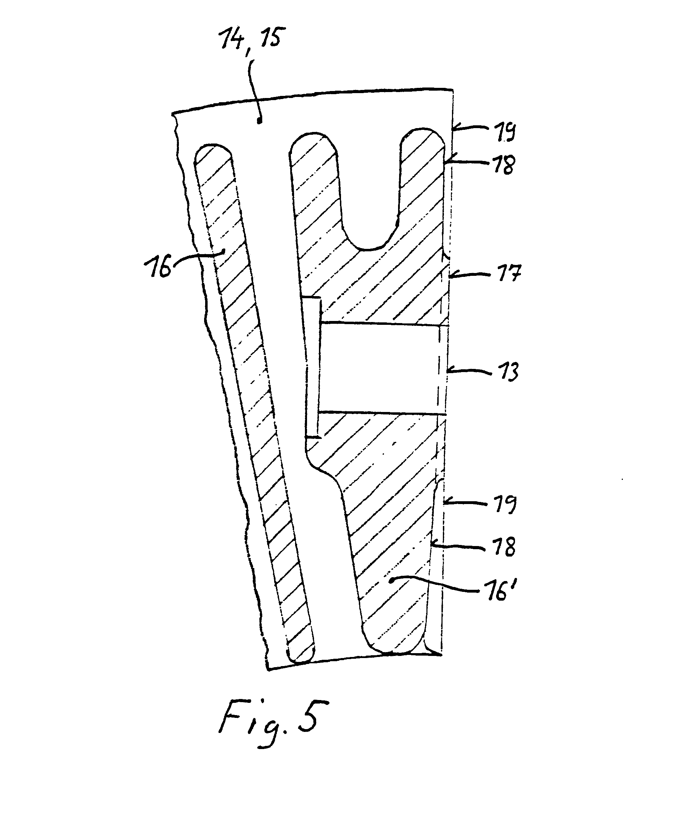

Jedes Reibringteil 1 und 3 weist zwei axial zueinander versetzte Ringkörper 14 bzw. 15 auf, welche durch im wesentlichen radial verlaufende Rippen 16 (Figur 5) miteinander verbunden sind. Die Rippen 16 stellen zugleich Ventilationsflügel zum Fördern von Kühlluft durch den Reibring 2 dar. In Figur 2 und 3 sind lediglich die jeweils stirnseitig die Reibringteile 1 und 3 abschließenden, gemäß Figur 5 etwas verstärkten und die Stirnfläche 11 bzw. 13 tragenden Rippen 16' darstellt.

Die profilierten Stirnflächen 13 zeigen in Aufsicht gemäß Figur 4 einen zentralen Flächenbereich 17, welcher den in Figur 4 geschnitten dargestellten Schaft der Verschraubung 9 umschließt. Der Flächenbereich 17 weist eine einem hochgestellten Oval entsprechende Gestalt auf, sein Flächeninhalt ist relativ klein, er entspricht höchstens einem niedrigzahligen Vielfachen der Querschnittsfläche des Schaftes der Verschraubung 9. Der Flächenbereich 17 ist von einem Stirnflächenabschnitt 18 umschlossen, an welchen sich beiderseits je ein Flächenabschnitt 19 anschließt, deren jeder im wesentlichen einem langgestreckten, hochgestellten Rechteck entspricht. Die Flächenabschnitte 19 entsprechen zumindest annähernd der Querschnitts- bzw. Stirnfläche der Ringkörper 14 und 15. Wie aus Figur 5 ersichtlich, befinden sich der Flächenbereich 17 und die Flächenabschnitte 19 in einer Ebene, während der Stirnflächenabschnitt 18 hierzu zurückversetzt angeordnet ist.

Beim Anziehen der Verschraubung 9 werden durch deren Klemmwirkung die augenartigen Flächenbereiche 17 in Verschraubunglängsrichtung und damit durch elastische Verformung der Rippen 16' geringfügig zurückgedrückt. Infolge hiervon werden die Flächenabschnitte 19 beider durch die Verschraubung miteinander zu verbindender Reibringteile 1 und 3 unter Druckvorspannung aufeinandergepreßt. Die Stirnflächenabschnitte 18 der beiden Reibringteile 1 und 3 verbleiben im Abstand voreinander.

Die durch die Verschraubung 9 bewirkte Druckvorspannung zwischen den aufeinanderliegenden Flächenabschnitten 19 der Reibringteile 1 und 3 sichern, daß die Trennfuge 5 stets geschlossen bleibt, sich in dieser also kein Bremsstaub ansammeln und sie allmählich immer weiter bis zum Bruch aufweiten kann. Durch die stets geschlossenen Teilfugen werden auch die Bremsbeläge nicht zusätzlich verschlissen. Die Bremsbeläge können damit ihre optimalen Betriebszeiten erreichen. Der geteilte Reibring 2 verhält sich also wie ein geschlossener, einteiliger Reibring.

Zum Verdeutlichen der am Endbereich der Reibringteile 1 und 3 wirkenden Kräfte sind diese in Figur 6 dargestellt. Die Verschraubung 9 presst mit ihrer durch Pfeile 20 dargestellten Vorspannung die Stirnflächen 13 zweier Reibringteile 1 und 3 im mittleren Flächenbereich 17 zusammen, während insbesondere bei Erwärmung des Reibringes in den Ringkörpern 14 und 15 beider Reibringteile 1 und 3 durch die Pfeile 21 symbolisierte Spannungen auftreten, welche die Stirnflächen 13 der beiden Reibringteile 1 und 3 voneinander abzuheben suchen. Die Vorspannung 20 ist derart zu bemessen, daß über die Rippen 16' noch ein ausreichend hoher Vorspannungsanteil zu den Flächenabschnitten 19 gelangt, um diese entgegen den Spannungen 21 aufeinanderzupressen.

Die vorstehend geschilderten Verhältnisse stellen sich ein, gleichgültig, ob gemäß Figur 2 eine profilierte Stirnfläche 13 und eine ebene Stirnfläche 11 oder ob gemäß Figur 3 zwei profilierte Stirnflächen 13 aneinander anliegen, die vorstehenden Erläuterungen sind somit für beide Ausführungsformen zutreffend.

Um bei angezogener Verschraubung 9 die Spannungsverteilung auf den Flächenbereich 17 und die Flächenabschnitte 19 in gewünschter Weise einstellen zu können, können in Abänderung des vorstehend beschriebenen Ausführungsbeispiels die profilierten Stirnflächen 13 derart gestaltet sein, daß bei loser Verschraubung 9, also bei Fehlen der durch die Verschraubung 9 ausübbaren Vorspannung 20, sich der Flächenbereich 17 sich in einer geringfügig gegenüber den Flächenabschnitten 19 zurückversetzten Lage befindet. Die Zurückversetzung des Flächenbereiches 17 ist dabei derart zu bemessen, daß beim Anziehen der Verschraubung 9 und damit Auftreten der Vorspannung 20 unter durch diese Vorspannung 20 bewirkter, elastischer Verformung der Rippe 16' der Flächenbereich 17 in eine Ebene zu den Flächenabschnitten 19 gelangt und somit auch zur Anlage am entsprechenden Flächenbereich 17 des anderen Reibringteiles 3 bzw. 1 kommt. Hierdurch wird erreicht, daß der Spannungsanteil der von der Verschraubung 9 ausgeübten Vorspannung 20, mit welchem die Flächenabschnitte 19 aufeinandergepreßt werden, gegenüber dem zuvor beschriebenen Ausführungsbeispiel vergrößert wird.

Eine weitere Möglichkeit, um die Verteilung der von der Verschraubung 9 ausgeübten Vorspannung 20 auf den Flächenbereich 17 und den Flächenabschnitt 19 zu beeinflussen, besteht in einer entsprechenden Gestaltung und Größenfestlegung des Flächenbereiches 17. Der Flächenbereich 17 kann dabei auch eine von Figur 4 abweichende Gestalt, beispielsweise Kreisringform erhalten.

In Abwandlung der vorstehend beschriebenen Ausführungsbeispiele können alle Stirnflächen der Reibringteile 1 und 3 auch völlig eben ausgebildet werden, es ist dann in die Trennfläche zwischen den Reibringteilen ein profiliertes Distanzblech einzulegen, welches an den einander gegenüberstehenden Stirnflächen nur im Bereich der Flächenbereiche 17 und Flächenabschnitte 19 anliegt, im Bereich der Stirnflächenabschnitte 18 jedoch eine geringere Stärke aufweist und somit in diesen Stirnflächenabschnitten 18 nicht oder höchstens spannungsfrei an diesen Stirnflächenabschnitten 18 anliegt.

In weiterer Abänderung von den vorstehend beschriebenen Ausführungsbeispielen kann der Reibring auch mehrfach unterteilt sein, also aus mehr als zwei Reibringteilen zusammengesetzt sein.

## Kurzfassung

Die Bremsscheibe weist einen geteilten, belüfteten Reibring auf, der aus Reibringteilen 1, 3 zusammengesetzt ist. In den Trennfugen weist wenigstens einer der Reibringteile 1,3 eine profilierte Stirnfläche 13 auf, welche einen zentralen Flächenbereich 17 besitzt, der die die Reibringteile 1,3 mit Vorspannung miteinander verbindende Verschraubung 9 umgibt. Der Flächenbereich 17 ist von einem Stirnflächenabschnitt 18 umgeben, an welchen sich beiderseits Flächenabschnitt 19 anschließen, die schmalen, hochgestellten Rechtecken entsprechen. Der Flächenbereich 17 und die Flächenabschnitte 19 befinden sich wenigstens annähernd in einer Ebene, der Flächenbereich 17 ist höchstens geringfügig zurückversetzt. Der Stirnflächenabschnitt 18 befindet sich demgegenüber in einer wesentlich weiter zurückversetzten Lage. Unter der Vorspannung der Verschraubung 9 werden die Flächenbereiche 17 und Flächenabschnitte 19 mit Vorspannung an die entsprechenden Flächen des jeweils anderen Reibringteiles 3,1 angepreßt, während der Stirnflächenabschnitt 18 anlagefrei verbleibt.

Durch die Profilierung der Stirnfläche 13 wird erreicht, daß die Trennfuge zwischen den Reibringteilen 1, 3 unter Vorspannung, zumindest im Bereich der Reibflächen des Reibringes, stets geschlossen bleibt, sich somit kein die Trennfuge keilartig allmählich immer weiter aufweitender Bremsstaub absetzen kann und die Reibbeläge durch die Trennfugen keinem zusätzlichen Verschleiß unterworfen werden.

### Bezugszeichenliste

| | |
|---|---|
| 1 | Reibringteil |
| 2 | Reibring |
| 3 | Reibringteil |
| 5 | Trennfuge |
| 7 | Trennfuge |
| 9 | Verschraubung |
| 11 | Stirnfläche |
| 13 | Stirnfläche |
| 14 | Ringkörper |
| 15 | Ringkörper |
| 16 | Rippe |
| 16' | Rippe |
| 17 | Flächenbereich |
| 18 | Stirnflächenabschnitt |
| 19 | Flächenabschnitt, Stirnfläche der Reibringkörper |
| 20 | Vorspannung |
| 21 | Spannung |

## Patentansprüche

1. Bremsscheibe mit aus zwei Ringteilen (1, 3) aufgebautem Reibring (2), insbesondere Achsbremsscheibe für Schienenfahrzeuge, mit zwei axial versetzten, entsprechend dem Reibring (2) geteilten Ringkörpern (14, 15), wobei jeweils zwei einander gegenüberstehende Ringkörper (14, 15) durch im wesentlichen radial verlaufende Rippen (16, 16') miteinander verbunden sind, und mit einer die Trennfuge (5, 7) zwischen den Reibringteilen (1, 3) mit Vorspannung überbrückenden Verschraubung (9), wobei einander gegenüberstehende Stirnflächen (11, 13) der Reibringteile (1, 3) in den Bereichen der Verschraubung und ihrer seitlichen Begrenzung aneinander anliegen, in den übrigen Bereichen dagegen Abstand zueinander aufweisen, dadurch gekennzeichnet, daß die Stirnflächen (11, 13) der Reibringteile (1, 3) im Bereich der Trennfuge (5, 7) in einem die Verschraubung (9) umschließenden Flächenbereich (17) und in sich im wesentlichen radial erstreckenden Stirnflächen (19) der Ringkörper (14, 15) Anlageflächen aufweisen, die unter der Vorspannung der Verschraubung (9) aneinander anliegen und zu welchen restliche Stirnflächenabschnitte (18) zurückversetzt angeordnet sind, wobei sich bei loser Verschraubung (9) der Flächenbereich (17) relativ zu den Flächenabschnitten (19) zurückversetzt befindet und nur unter durch die Verspannung der angezogenen Verschraubung (9) bewirkbarer, elastischer Verformung des Endabschnittes des Reibringteiles (1, 3) in eine Ebene zu den Stirnflächen (19) der Reibringkörper (14, 15) gelangt.

2. Bremsscheibe nach Anspruch 1, dadurch gekennzeichnet, daß die Reibringteile (3) im Bereich der Trennfuge (5, 7) ebene Stirnflächen (11) aufweisen, zwischen welchen sich ein nur im Flächenbereich und in den Flächenabschnitten an diesen Stirnflächen anliegendes, profiliertes Distanzblech befindet.

## Claims

1. Brake disc with a friction ring (2) constructed from two ring segments (1, 3), in particular axle brake discs for rail vehicles, having two axially offset ring bodies (14, 15) segmented correspondingly to the friction ring (2), wherein respectively two oppositely located ring bodies (14, 15) are joined together by substantially radially extending ribs (16, 16'), and having screws (9) bridging the parting plane (5, 7) between the friction ring segments (1, 3) under tension, wherein opposite front faces (11, 13) of the friction ring segments (1, 3) are adjacent to each other in the regions of the screws and their lateral delimitation, but in the other regions they are spaced apart, characterised in that the front faces (11, 13) of the friction ring segments (1, 3) in the region of the parting plane (5, 7) in a surface area (17) surrounding the screws (9) and in substantially radially extending front faces (19) of the ring bodies (14, 15) have bearing surfaces which abut each other under the tension of the screws (9) and to which other front face portions (18) are arranged to be offset, whereby when the screws (9) are slack the surface area (17) is set back relative to the surface portions (19), and only under the elastic deformation of the end portion of the friction ring segment (1, 3) caused by the tension of the tightened screws (9) reaches the plane of the front faces (19) of the ring bodies (14, 15).

2. Brake disc according to claim 1, characterised in that the friction ring segments (3) in the region of the parting plane (5, 7) have flat front faces (11) between which is located a profiled spacer plate abutting these front faces only in the surface area and in the surface portions.

## Revendications

1. Disque de frein à anneau de friction (2) constitué par deux éléments annulaires (1, 3), en particulier disque de frein d'essieu pour des véhicules sur rails, avec deux corps annulaires (14, 15) décalés axialement et subdivisés en fonction de l'anneau de friction (2), deux corps annulaires (14, 15) qui se font face étant reliés entre eux par des nervures (16, 16') qui s'étendent, pour l'essentiel, radialement, et avec un vissage (9) qui traverse avec pré-tension l'espace de séparation (5, 7) qui existe entre les éléments (1, 3) de l'anneau de friction, les surfaces frontales (11, 13) des éléments d'anneau de friction (1, 3) portant l'une contre l'autre dans les zones du vissage et de leur limitation latérale, alors que dans les autres zones ils présentent un espace entre eux, caractérisé par le fait que les surfaces frontales (11) 13) des éléments d'anneau de friction (1, 3) présentent dans la zone de l'espace de séparation (5, 7) dans une zone de surface (17) qui entoure le vissage (9) et dans ces surfaces frontales des corps annulaires (14, 15), des surfaces d'appui qui portent l'une contre l'autre sous l'effet de la pré-tension du vissage et par rapport auxquelles les sections résiduelles (18) des surfaces frontales sont décalées vers l'arrière, la zone de surface (17) étant, lorsque le vissage (19) est desserré, décalée vers l'arrière par rapport aux sections de surface (19), et ne parvenant dans un plan par rapport aux surfaces frontales (19) des corps de friction (14, 15), que par déformation élastique de la section d'extrémité de l'élément du disque de friction (13) obtenue grâce à la pré-tension du vissage serré (9).

2. Disque de frein selon la revendication 1, caractérisé par le fait que les éléments (3) de l'anneau de friction comportent, dans la zone de séparation (5, 7), des surfaces frontales planes (11) entre lesquelles se situe une tôle d'entretoise profilée qui ne porte contre les surfaces frontales que dans la zone superficielle (17) et dans les sections superficielles (19).

**0 166 879**

Fig. 1

Fig. 2

Fig. 3

Fig.4

Fig.6

Fig.5